# EUROPÄISCHE PATENTSCHRIFT

(11) **EP 0 907 484 B1**
(45) Veröffentlichungstag und Bekanntmachung des Hinweises auf die Patenterteilung: **21.02.2001**
(21) Anmeldenummer: 97923955.5
(22) Anmeldetag: 21.05.1997
(51) Int. Cl.: B29C 45/14, B29C 45/16, B60K 20/02

(54) **VERFAHREN ZUR HERSTELLUNG VON HOCHWERTIGEN KUNSTSTOFFTEILEN UND SPRITZGIESSTEIL**
METHOD OF PRODUCING HIGH-GRADE PLASTICS PARTS AND INJECTION-MOULDED PART
PROCEDE DE PRODUCTION DE PIECES PLASTIQUES DE HAUTE QUALITE ET PIECE MOULEE PAR INJECTION

(30) Priorität: 22.05.1996 DE 19620646
(43) Veröffentlichungstag der Anmeldung: 14.04.1999
(73) Patentinhaber: Eldra Kunststofftechnik GmbH, 84144 Geisenhausen (DE)
(72) Erfinder: GOTTERBAUER, Klaus, D-84186 Vilsheim (DE); KÖNSGEN, Stefan, D-84028 Landshut (DE)
(74) Vertreter: Kohlmann, Karl Friedrich, Dipl.-Ing.
(86) Internationale Anmeldenummer: EP9702581
(87) Internationale Veröffentlichungsnummer: WO9744172

(56) Entgegenhaltungen:
- EP-A- 0 419 911
- DE-A- 2 353 816
- US-A- 3 991 146

## Beschreibung

Die vorliegende Erfindung betrifft ein Verfahren zur Herstellung von hochwertigen Kunststoffteilen und ein Spritzgießteil, das entsprechend hergestellt ist.

Bei hochwertigen Kunststoffteilen, insbesondere für die Innenraum-Ausstattung von Kraftfahrzeugen spielen Eigenschaften, die das Gefühl bei leichter Berührung und das Gefühl beim kräftigen Erfassen mit der Hand betreffen, eine wesentliche Rolle.

So ist es beispielsweise bereits bekannt, ein durch ein herkömmliches Spritzverfahren hergestelltes Kernformteil, bei bestimmten Kunststoffteilen "Einleger" genannt, mit einer zweiten Komponente zu umschäumen. Mit einer derartigen Verfahrensweise können beispielsweise Schalthebel für Kraftfahrzeuggetriebe hergestellt werden. Beim Umschäumen mit der zweiten Komponente bildet sich an der Innenfläche des Formhohlraumes eine Schicht aus, die zu einer relativ harten Haut führt, welche dem Kunststoffteil einen angenehmen, trockenen Griff verleiht. Die relativ harte Haut geht nach innen in ein weiches Schaumstoff gefüge über, das zu einem angenehmen Touch beim kräftigen Erfassen mit der Hand führt. Die Kombination aus trockenem Griff und weichem Touch erbringt ein besonderes Griffgefühl, das allenfalls von dem Griffgefühl eines mit Leder besetzten Teiles übertroffen werden kann.

Auf diese Weise, d.h. nach dem sogenannten "Integralschaumverfahren", hergestellte und mit Einleger versehene Kunststoffteile erfordern jedoch einen relativ aufwendigen Prozeßablauf und eine mehr oder minder aufwendige Nacharbeit. Wegen der Neigung des Verfahrens zur Lunkerbildung ist zudem die Ausschußquote relativ hoch.

Es ist auch bereits bekannt, Einleger mit einer einzigen Kunststoffkomponente zu umspritzen. Dieses Umspritzen des Einlegers eignet sich wegen seiner Prozeßsicherheit gut für eine automatische Herstellung und läßt zudem relativ kurze Taktzeiten zu. Auch erfordern durch Umspritzen des Einlegers hergestellte Kunststoffteile keinerlei Nacharbeit.

Von Nachteil ist allerdings, daß in Abhängigkeit von der für das Umspritzen des Einlegers eingesetzten Komponente nur das dieser Komponente eigene Griffgefühl erzeugt werden kann. Wird zum Umspritzen zum Beispiel eine harte Komponente verwendet, ergibt sich zwar ein angenehmer trockener Griff, jedoch auch ein unangenehm harter Touch beim kräftigen Erfassen mit der Hand. Wird dagegen zum Umspritzen eine weiche Komponente eingesetzt, führt dies zwar zu einem angenehmen weichen Touch, jedoch auch zu einem unangenehmen gummiartigen, klebrigen Griff. Das besondere, durch das eingangs beschriebene Umschäumen eines Einlegers erzielbare Griffgefühl kann dagegen durch ein Umspritzen nicht erreicht werden.

Es ist ferner bekannt, Kunststoffteile nach dem sogenannten Mono-Sandwich-Verfahren herzustellen. Bei diesem Spritzverfahren werden zwei oder mehrere unterschiedliche Schmelzenkomponenten in einer bestimmten Schichtung in einen Spritzzylinder eingespeist und anschließend von dem Spritzzylinder hintereinander in einen Formhohlraum eingepreßt. Die zuerst in den Formhohlraum eingepreßte Komponente bildet an den Formhohlraumwänden eine Haut, an die sich die nachfolgende Komponente auf der Hautinnenseite zur Bildung einer Zwischenlage anlegt.

Das sogenannte Mono-Sandwich-Verfahren wurde entwickelt, um hochwertigen Kunststoff möglichst sparsam und nur an denjenigen Stellen einsetzen zu können, an denen das hochwertige Material aus optischen oder anderen Gründen erforderlich ist. So können mit dem Mono-Sandwich-Verfahren beispielsweise Joghurt-Becher hergestellt werden, deren Becherinnenwand und Becheraußenwand aus für die Aufnahme von Lebensmitteln zugelassenem hochwertigen Kunststoff und der innere Wandungs- bzw. Kernbereich aus einem luftdichten Kunststoffmaterial besteht.

Auch können mit dem sogenannten Mono-Sandwich-Verfahren Kunststoffgegenstände, wie Griffe und dergleichen hergestellt werden, deren Kernbereich zur Erzielung der für die Funktion notwendigen statischen Eigenschaften aus einem harten Kunststoffmaterial und deren Außenbereich aus einem weichen Kunststoffmaterial besteht.

Aufgabe der vorliegenden Erfindung ist es, eine neuartige Verfahrensweise zu schaffen, mit dem sich das bisher nur durch aufwendiges Umschäumen erzielbare besondere Griffgefühl auch mittels Umspritzen eines Einlegers herstellen läßt.

Diese Aufgabe wird erfindungsgemäß durch ein Spritzgießverfahren gelöst, bei dem in dem Spritzzylinder eine Schichtung aus mindestens einer harten und im Anschluß daran mindestens einer weichen Komponente eines Kunststoffmaterials aufgebaut wird und danach diese Komponenten in dieser Reihenfolge aus dem Spritzzylinder hintereinander in den Formhohlraum zum Umspritzen des Einlegers eingespeist werden.

Unter den Begriff "Umspritzen" ist hier auch zu subsumieren, daß diese Schichtung aus harten und weichen Komponenten an einen Einleger angespritzt wird, also beispielsweise nur eine Seite des Einlegers mit der erwähnten Schichtfolge aus verschiedenen Komponenten versehen wird.

Der Erfindung liegt der Gedanke zugrunde, einen Einleger mit dem an sich für vollkommen andere Anwendungsbereiche geschaffenen Mono-Sandwich-Verfahren in der Weise zu umspritzen, daß an der Außenseite des fertigen Kunststoffteiles eine relativ harte Haut erzeugt wird, an die sich in Richtung des Einlegers mindestens eine weiche Schicht anschließt. Durch die relativ harte Außenhaut auf einer relativ weichen Schicht wird der eingangs erwähnte trockene Griff mit weichem Touch erzielt, der bisher nur durch das aufwendige Umschäumen erreicht werden konnte. Zudem wird die harte Komponente in einer dünnen Schicht an den Einleger angelegt, so daß dort eine hervorragende Haftung mit dem Einleger erzielt wird, was bei einer weichen Komponente, die den gewünschten weichen Griff erbringt, sehr problematisch ist.

Die neue Verfahrensweise läßt eine vollkommen automatische Herstellung mit kurzen Taktzeiten zu und erfordert keinerlei Nacharbeit an den in dieser Weise hergestellten Kunststoffteilen.

Vorteilhaft ist es, wenn als weiche Komponente ein Kunststoffmaterial eingesetzt wird, das im fertigen Zustand eine Härte von 7 bis 40 Shore A, vorzugsweise 30 Shore A besitzt, insbesondere um einen sehr "softes" Griffgefühl zu erzielen, 7-8 Shore A aufweist .

Als harte Komponente eignet sich besonders ein Kunststoffmaterial, das im fertigen Zustand des Kunststoffteiles eine Härte von 70 bis 100 Shore A, vorzugsweise 90 Shore A aufweist.

Das erfindungsgemäße Verfahren eignet sich grundsätzlich zur Herstellung jeder Art von Kunststoffteilen. Besonders vorteilhaft ist es jedoch für Kunststoffteile, die für die Austattung von Innenräumen von Kraftfahrzeugen benötigt und mit der Hand berührt werden. Derartige Kunststoffteile sind beispielsweise Schalt- oder Ganghebel, Griffe, Knöpfe, Handschuhfachdeckel und dergleichen.

Im folgenden wird zur weiteren Erläuterung und zum besseren Verständnis der Erfindung ein Ausführungsbeispiel unter Bezugnahme auf die beigefügten Zeichnungen näher beschrieben und erläutert. Es zeigt:
- Fig. 1: eine schematische Darstellung einer Spritzgießvorrichtung zur Durchführung des erfindungsgemäßen Verfahrens, und
- Fig. 2: einen mittels des erfindungsgemäßen Verfahrens hergestellten Schalthebel.

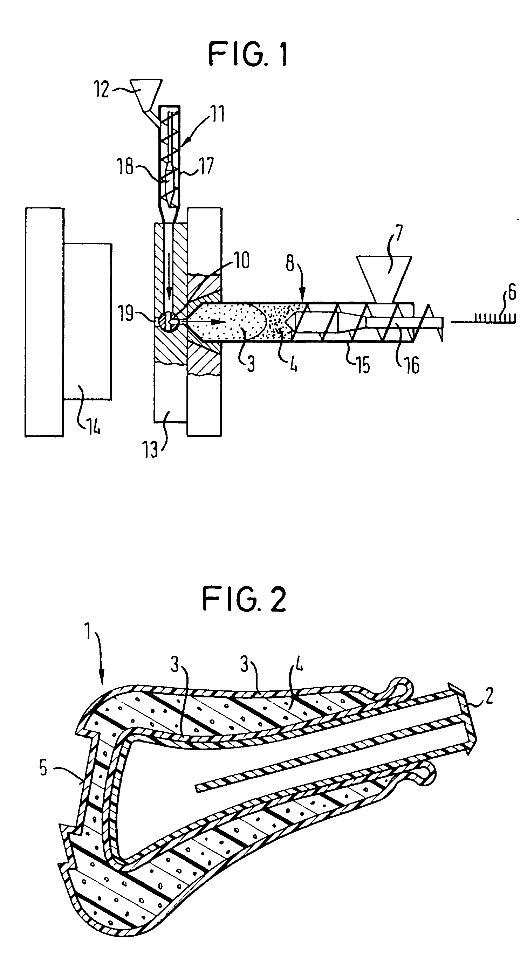

Die Spritzgießvorrichtung zur Durchführung des erfindungsgemäßen Verfahrens ist schematisch in der Fig. 1 dargestellt. Sie umfaßt ein Hauptspritzaggregat 8 und einen nebengeordneten Nebenextruder 11. Das Hauptspritzaggregat 8 besteht im wesentlichen aus einem Haupttrichter 7 und einem beheizten Schneckenzylinder 15 mit innenliegender Schnecke 16. Ferner ist mit dem Hauptspritzaggregat 8 ein Wegmeßsystem 6 gekoppelt, mit dem der von der Schnecke 16 im Hauptzylinder 15 zurückgelegte Weg meßbar ist.

Der Nebenextruder 11 hat im wesentlichen den gleichen Aufbau wie das Hauptspritzaggregat 8. Er umfaßt einen Nebentrichter 12 und einen Schneckenzylinder 17 mit innenliegender Schnecke 18.

Die Zuführungskanäle des Hauptspritzaggregates 8 und des Nebenextruders 11 sind über ein 3-Wege-Ventil 10 miteinander verbindbar. Das 3-Wege-Ventil ist Bestandteil einer Zwischenplatte 13. Im vorliegenden Fall ist es vorteilhafterweise als zwangsgesteuerter Schieber, der über eine Kulisse bewegt wird, ausgestaltet. Vom 3-Wege-Ventil 10 führt in einen Formhohlraum 14 ein Düsenkanal 19.

Nachfolgend wird nun die Herstellung eines wie beispielsweise in der Fig. 2 gezeigten Schalthebels 1 näher erläutert.

In den Formhohlraum 14 wird der beispielsweise gespritzte Einleger 2 fixiert. Im Nebentrichter 12 ist das gelagerte Kunststoffgranulat gelagert, das die härtere Komponente 3 des herzustellenden Schalthebels 1 bildet. Im Haupttrichter 7 des Hauptspritzaggregates 8 ist das die weichere Komponente 4 bildende Kunststoffgranulat gebunkert. Das 3-Wege-Ventil 10 ist so geschaltet, daß der Kanal vom Nebenextruder 11 mit dem Spritzzylinder des Hauptspritzaggregates 8 verbunden ist. Das im Nebentrichter 12 gelagerte Granulat oder Pulver wird dem Heizzylinder 17 des Nebenextruders 11 zugeführt. Der Werkstoff wird im Heizzylinder 17 plastifiziert und durch das 3-Wege-Ventil 10 hindurch in den Düsenbereich des Hauptspritzaggregates 8 eingeleitet. Dort bildet es die härtere Komponente 3.

Im Hauptspritzaggregat 8 wird die weichere Komponente 4 dem Heizzylinder 15 zugeführt und dort plastifiziert. Somit sind in diesem Bereich des Hauptspritzaggregates 8 - gesehen von dem Formhohlraum aus in Richtung des Hauptspritzaggregates 8 - die harte Komponente 3 und die weiche Komponente 4 in dieser Reihenfolge geschichtet.

Daraufhin wird das 3-Wege-Ventil 10 dergestalt umgeschaltet, daß die Zuführung zum Formhohlraum 14 über den Düsenkanal 19 offen und der Nebenextruderzugang verschlossen ist. Durch Betreiben der Schnecke 16 des Hauptspritzaggregates 8 wird in den Formhohlraum 14 zuerst die härtere Komponente 3 und dann die weichere Komponente 4 in dieser Reihenfolge in den Formhohlraum 14 eingespritzt. Dabei legt sich die härtere Komponente 3 zum einen an den Einleger 2 an und wird zum anderen durch die nacheilende weichere Komponente 4 aufgeweitet, so daß sich auch eine durch die härtere Komponente 3 gebildete Außenhaut ausbildet. Zwischen der Außenhaut und der direkt am Einleger 2 anliegenden dünnen Schicht bestehend aus der härteren Komponente 3 bildet sich damit eine dickere Schicht aus der weicheren Komponente 4 aus. Die von der härteren Komponente 3 gebildete Außenkontur ist durch den Formhohlraum 14 vorgegeben. So ist hier beispielsweise noch eine Aussparung 5 zur Einbringung einer Plakette vorgesehen.

Bei einem Türgriff (nicht gezeigt) ist diese Schichtung nur an einer Seite eines Einlegers aufgebracht, und nicht wie zuvor um den gesamten Einleger herum.

## Patentansprüche

1. Verfahren zur Herstellung eines Spritzgießteiles (1), bei dem ein Einleger (2) in einem Formhohlraum (14) angeordnet und mit über einen Spritzzylinder (8) eingespeisten Kunststoffmaterial (3, 4) umspritzt wird, **dadurch gekennzeichnet, daß**
in dem Spritzzylinder (8) eine Schichtung aus mindestens einer harten (3) und im Anschluß daran mindestens einer weichen Komponente (4) eines Kunststoffmaterials aufgebaut wird und danach diese Komponenten (3, 4) in dieser Reihenfolge aus dem Spritzzylinder (8) hintereinander in den Formhohlraum (14) zum Umspritzen des Einlegers (2) eingespeist werden.

2. Verfahren nach Anspruch 1,
**dadurch gekennzeichnet, daß**
zuerst mindestens eine weiche (4) und im Anschluß daran mindestens eine harte Komponente (3) eines Kunststoffmaterials in den Spritzzylinder (8) eingeleitet und danach diese Komponenten (3, 4) in der umgekehrten Reihenfolge aus dem Spritzzylinder (8) hintereinander in den Formhohlraum (14) zum Umspritzen des Einlegers (2) eingespeist werden.

3. Verfahren nach Anspruch 1,
**dadurch gekennzeichnet, daß**
die harte Komponente (3) aus einem Nebenextruder (11) in den Spritzzylinder (8) eingeleitet wird, und in Ausstoßrichtung gesehen die weiche Komponente (4) dahinter im Spritzzylinder (8) angefügt wird.

4. Verfahren nach Anspruch 1, 2 oder 3
**dadurch gekennzeichnet, daß**
als weiche Komponente (4) ein Kunststoffmaterial eingesetzt wird, das im fertigen Zustand eine Härte von 7 bis 40 Shore A besitzt.

5. Verfahren nach Anspruch 4,
**dadurch gekennzeichnet, daß**
das Kunststoffmaterial (4) eine Härte von 30 Shore A besitzt, insbesondere eine Härte von 7-8 Shore A aufweist.

6. Verfahren nach Anspruch 1, 2 oder 3,
**dadurch gekennzeichnet, daß**
als harte Komponente (3) ein Kunststoffmaterial eingesetzt wird, das im fertigen Zustand eine Härte von 70 bis 100 Shore A besitzt.

7. Verfahren nach Anspruch 6,
**dadurch gekennzeichnet, daß**
das Kunststoffmaterial (3) eine Härte von 90 Shore A besitzt.

8. Verfahren nach einem der Ansprüche 1-7,
**dadurch gekennzeichnet, daß**
das Kunststoffmaterial für die harte (3) und die weiche Komponente (4) ein auf SEBS (Styrol-Ethylen-Butadien-Styrol) basierender TPE (thermoplastisches Elastomer) ist.

9. Verfahren nach einem der Ansprüche 1-7,
**dadurch gekennzeichnet, daß**
das Kunststoffmaterial für die harte (3) und die weiche Komponente (4) ein TPU (thermoplastisches Urethan) ist.

10. Spritzgießteil mit einem Einleger (2), der gemäß dem Verfahren nach einem der vorstehenden Ansprüche mit mindestens einer weichen Komponente (4) und einer diese weiche Komponente umgebenden harten Komponente (3) umspritzt ist, wobei die harte Komponente in einer dünnen Schicht an dem Einleger anliegt, diese dünne Schicht von der mindestens einen weichen Schicht umgeben ist und diese zumindest eine weiche Schicht wiederum von der mindestens einen harten Komponente umhüllt ist.

11. Spritzgießteil nach Anspruch 10,
**dadurch gekennzeichnet, daß**
die weiche Komponente (4) ein Kunststoffmaterial ist, das im fertigen Zustand eine Härte von 20 bis 40 Shore A besitzt.

12. Spritzgießteil nach Anspruch 11,
**dadurch gekennzeichnet, daß**
das die weiche Komponente bildende Kunststoffmaterial (4) eine Härte von 30 Shore A besitzt, insbesondere eine Härte von 7-8 Shore A aufweist.

13. Spritzgießteil nach Anspruch 10,
**dadurch gekennzeichnet, daß**
die harte Komponente (3) ein Kunststoffmaterial ist, das im fertigen Zustand eine Härte von 70 bis 100 Shore A besitzt.

14. Spritzgießteil nach Anspruch 13,
**dadurch gekennzeichnet, daß**
das die harte Komponente bildende Kunststoffmaterial (3) eine Härte von 90 Shore A besitzt.

15. Spritzgießteil nach einem der Ansprüche 10-14,
**dadurch gekennzeichnet, daß**
das Kunststoffmaterial für die harte (3) und die weiche Komponente (4) ein auf SEBS (Styrol-Ethylen-Butadien-Styrol) basierender TPE (thermoplastisches Elastomer) ist.

16. Spritzgießteil nach einem der Ansprüche 10-14,
**dadurch gekennzeichnet, daß**
das Kunststoffmaterial für die harte (3) und die weiche Komponente (4) ein TPU (thermoplastisches Urethan) ist.

17. Spritzgießteil nach einem der Ansprüche 10-16,
**dadurch gekennzeichnet, daß**
das Spritzgießteil ein Schalthebel (1) ist.

18. Spritzgießteil nach einem der Ansprüche 10-16,
**dadurch gekennzeichnet, daß**
das Spritzgießteil ein Türgriff ist.

## Claims

1. Process for producing an injection-moulded part (1), in which an insert (2) is arranged in a mould cavity (14) and surrounded by plastic material (3, 4) supplied via an injection cylinder (8), characterised in that layering of at least one hard component (3) and following that at least one soft component (4) of a plastic material is built up in the injection cylinder (8) and then these components (3, 4) are supplied to the mould cavity (14) in this sequence from the injection cylinder (8) one after another to surround the insert (2).

2. Process according to claim 1, characterised in that initially at least one soft component (4) and following that at least one hard component (3) of a plastic material is introduced into the injection cylinder (8) and then these components (3, 4) are supplied to the mould cavity (14) in the reverse sequence from the injection cylinder (8) one after another to surround the insert (2).

3. Process according to claim 1, characterised in that the hard component (3) is introduced into the injection cylinder (8) from an auxiliary extruder (11), and, seen in the direction of ejection, the soft component (4) is added behind in the injection cylinder (8).

4. Process according to claim 1, 2 or 3, characterised in that a plastic material, which has a Shore A hardness of 7 to 40 in the final state, is used as the soft component (4).

5. Process according to claim 4, characterised in that the plastic material (4) has a Shore A hardness of 30, in particular has a Shore A hardness of 7-8.

6. Process according to claim 1, 2 or 3, characterised in that a plastic material, which has a Shore A hardness of 70 to 100 in the final state, is used as the hard component (3).

7. Process according to claim 6, characterised in that the plastic material (3) has a Shore A hardness of 90.

8. Process according to one of claims 1-7, characterised in that the plastic material for the hard component (3) and the soft component (4) is a TPE (thermoplastic elastomer) based on SEBS (styrene-ethylene-butadiene-styrene).

9. Process according to one of claims 1-7, characterised in that the plastic material for the hard component (3) and the soft component (4) is a TPU (thermoplastic urethane).

10. Injection-moulded part having an insert (2), which according to the process according to one of the above claims is surrounded by at least one soft component (4) and a hard component (3) surrounding this soft component, wherein the hard component rests against the insert in a thin layer, this thin layer being surrounded by the at least one soft layer and this at least one soft layer being enveloped in turn by the at least one hard component.

11. Injection-moulded part according to claim 10, characterised in that the soft component (4) is a plastic material, which has a Shore A hardness of 20 to 40 in the final state.

12. Injection-moulded part according to claim 11, characterised in that the plastic material (4) forming the soft component has a Shore A hardness of 30, in particular has a Shore A hardness of 7-8.

13. Injection-moulded part according to claim 10, characterised in that the hard component (3) is a plastic material, which has a Shore A hardness of 70 to 100 in the final state.

14. Injection-moulded part according to claim 13, characterised in that the plastic material (3) forming the hard component has a Shore A hardness of 90.

15. Injection-moulded part according to one of claims 10-14, characterised in that the plastic material for the hard component (3) and the soft component (4) is a TPE (thermoplastic elastomer) based on SEBS (styrene-ethylene-butadiene-styrene).

16. Injection-moulded part according to one of claims 10-14, characterised in that the plastic material for the hard component (3) and the soft component (4) is a TPU (thermoplastic urethane).

17. Injection-moulded part according to one of claims 10-16, characterised in that the injection-moulded part is a switch lever (1).

18. Injection-moulded part according to one of claims 10-16, characterised in that the injection-moulded part is a door handle.

## Revendications

1. Procédé de fabrication d'une pièce moulée par injection (1), dans lequel une pièce d'insertion (2) est disposée dans un espace creux de moulage (14) et est enrobée par injection par un matériau synthétique (3, 4) injecté par l'intermédiaire d'un cylindre d'injection (8), caractérisé en ce que dans le cylindre d'injection (8) est constituée une mise en couche, formée d'au moins un composant (3) dur et, à sa suite, d'au moins un composant souple (4) d'un matériau synthétique, puis ces composants (3, 4), dans cet ordre de succession, sont injectés les uns après les autres du cylindre d'injection (8) dans l'espace creux de moulage (14) pour effectuer l'enrobage par injection de l'élément d'insertion (2).

2. Procédé selon la revendication 1, caractérisé en ce que, d'abord, au moins un composant souple (4) et, ensuite, un composant dur (3) d'un matériau synthétique est introduit dans le cylindre d'injection (8) puis ces composants (3, 4) dans l'ordre de succession inverse sont injectés depuis le cylindre d'injection (8) les uns derrière les autres dans l'espace creux de moulage (14), pour effectuer l'enrobage par injection de l'élément d'insertion (2).

3. Procédé selon la revendication 1, caractérisé en ce que le composant dur (3) est introduit dans le cylindre d'injection (8) depuis une extrudeuse annexe (11) et, en observant dans la direction d'expulsion, le composant souple (4) est adjoint derrière lui dans le cylindre d'injection (8).

4. Procédé selon la revendication 1, 2 ou 3, caractérisé en ce qu'on utilise comme composant souple (4) un matériau synthétique qui, à l'état terminé, a une dureté de 7 à 40 Shore A.

5. Procédé selon la revendication 4, caractérisé en ce que le matériau synthétique (4) a une dureté de 30 Shore A, en particulier une dureté de 7-8 Shore A.

6. Procédé selon la revendication 1, 2 ou 3, caractérisé en ce qu'on utilise comme composant dur (3) un matériau synthétique qui, à l'état terminé, a une dureté de 70 à 100 Shore A.

7. Procédé selon la revendication 6, caractérisé en ce que le matériau synthétique (3) a une dureté de 90 Shore A.

8. Procédé selon l'une des revendications 1 à 7, caractérisé en ce que le matériau synthétique du composant dur (3) et du composant souple (4) est un TPE (Elastomère Thermoplastique) à base de SEBS (styrène-éthylène-butadiène-styrène).

9. Procédé selon l'une des revendications 1 à 7, caractérisé en ce que le matériau synthétique du composant dur (3) et du composant souple (4) est un TPU (Uréthane Thermoplastique).

10. Pièce moulée par injection avec un élément d'insertion (2) enrobé par injection selon le procédé selon l'une des revendications précédentes, avec au moins un composant souple (4) et un composant dur (3) entourant ce composant souple, le composant dur étant appliqué sur l'élément d'insertion en une couche mince, cette couche mince étant entourée par la au moins une couche souple et cette au moins une couche souple étant à son tour enveloppée par ledit au moins un composant dur.

11. Pièce moulée par injection selon la revendication 10, caractérisée en ce que le composant souple (4) est un matériau synthétique ayant à l'état terminé une dureté de 20 à 40 Shore A.

12. Pièce moulée par injection selon la revendication 11, caractérisée en ce que le matériau synthétique (4) formant le composant souple a une dureté de 30 Shore A, en particulier une dureté de 7 à 8 Shore A.

13. Pièce moulée par injection selon la revendication 10, caractérisée en ce que le composant dur (3) est un matériau synthétique qui à l'état terminé a une dureté de 70 à 100 Shore A.

14. Pièce moulée par injection selon la revendication 13, caractérisée en ce que le matériau synthétique (3) constituant le composant dur a une dureté de 90 Shore A.

15. Pièce moulée par injection selon l'une des revendications 10 à 14, caractérisée en ce que le matériau synthétique du composant dur (3) et du composant souple (4) est un TPE (Elastomère Thermoplastique) à base de SEBS (styrène-éthylène-butadiène-styrène).

16. Pièce moulée par injection selon l'une des revendications 10 à 14, caractérisé en ce que le matériau synthétique du composant dur (3) et du composant souple (4) est un TPU (Uréthane Thermoplastique).

17. Pièce moulée par injection selon l'une des revendications 10 à 16, caractérisée en ce que la pièce moulée par injection est un levier de vitesse (1).

18. Pièce moulée par injection selon l'une des revendications 10 à 16, caractérisée en ce que la pièce par injection est une poignée de porte.
